# EUROPEAN PATENT APPLICATION

(11) **EP 3 499 197 A1**
(43) Date of publication of application: **19.06.2019**
(21) Application number: 18207985.5
(22) Date of filing: 23.11.2018
(51) Int. Cl.: G01G 19/00

(54) **ELECTRONIC BALANCE AND TARGET WEIGHING VALUE SETTING METHOD**

(30) Priority: 14.12.2017 JP 2017239665
(71) Applicant: Shimadzu Corporation, Kyoto 604-8511 (JP)
(72) Inventor: KATOH, Masahiro, Kyoto-shi, Kyoto 604-8511 (JP)
(74) Representative: Kilian Kilian & Partner

(57) **Abstract**

An electronic balance 1 includes an operation section 4, a reading processing section 5, and a controller 6. The controller 6 includes the input receiving section 62 and the target weighing value calculating section 63. A container 10 for storing a sample is provided with a holding medium 20 that holds weight ratio information associated with the sample. When the electronic balance 1 is used, the reading processing section 5 reads the weight ratio information from the holding medium 20. The input receiving section 62 receives information on a target collection weight input by a user through operation of the operation section 4. The target weighing value calculating section 63 calculates a target weighing value of a measurement sample necessary for collecting a target substance of the target collection weight based on the weight ratio information read by the reading processing section 5. Thus, it is possible to omit operation for the user to input the weight ratio information in the electronic balance 1. As a result, it is possible to simplify user's operation when the electronic balance 1 is used.

## Description

### TECHNICAL FIELD

The present invention relates to an electronic balance that weighs a sample and displays the weighing value on a display and a target weighing value setting method in weighing the sample.

### BACKGROUND

As a case of performing weighing using an electronic balance, there is a case where desiring to weigh a specific substance, contained in a sample, by a desired weight. An electronic balance that calculates the weight of the specific substance from an actual weighing value to be weighed by the electronic balance based on weight ratio information of the specific substance contained in the sample has been proposed as an apparatus assuming such a case (see, for example, Japanese Unexamined Patent Application Publication No. 2017-26447).

For example, when desiring to weigh 100 g of a net sample (one compound) contained in a measurement sample (mixture) having a purity of 98%, information that the purity is 98% is used as the weight ratio information. Based on the weight ratio information, a weighing value of the net sample is calculated from a weighing value of the actual measurement sample. Thus, a user places the sample on the electronic balance until the calculated value reaches 100 g. In this case, once the weighing value of the actual measurement sample reaches about 102 g, the weighing value of the net sample to be calculated reaches 100 g.

### SUMMARY OF THE INVENTION

In the above-described conventional electronic balance, a user inputs the weight ratio information with an operation section on the electronic balance at every weighing. The weight ratio information includes not only purity information but also various information such as a molecular weight of a compound, chloride contained in the compound, and a molecular weight of hydration water. Thus, there has been a problem that the user has to perform cumbersome input operation at every weighing.

The present invention has been made in view of the above circumstances, and an object thereof is to provide an electronic balance capable of simplifying user's operation and a target weighing value setting method.
(1) An electronic balance according to the present invention includes a reading processing section, an input receiving section, and a target weighing value calculating section. The reading processing section reads information for specifying a weight ratio of a target substance contained in a sample from a holding medium in which the information for specifying the weight ratio is held in association with the sample. The input receiving section receives an input of a target collection weight of the target substance contained in the sample. The target weighing value calculating section calculates a target weighing value of a sample necessary for collecting the target substance of the target collection weight based on the information read by the reading processing section.

According to such a configuration, the reading processing section reads information for specifying the weight ratio from the holding medium, and the target weighing value calculating section calculates the necessary target weighing value.

Thus, it is possible to omit operation for the user to input information for specifying the weight ratio in a main body of the electronic balance.

As a result, it is possible to simplify user's operation when the electronic balance is used.
(2) The electronic balance further includes a display processing section. The display processing section displays the target weighing value calculated by the target weighing value calculating section.

According to such a configuration, it is possible for the user to recognize the target weighing value. Then, the user can weigh the sample while confirming the target weighing value.
(3) The electronic balance may further include a storage processing section. The storage processing section causes a storage to store blending information of a plurality of types of samples when the samples are blended. The reading processing section may read information for specifying the weight ratio held in the holding medium in association with each of the plurality of types of samples. The target weighing value calculating section may calculate the respective target weighing values of the plurality of types of samples based on the information read by the reading processing section. The storage processing section causes the storage to store as the blending information the target weighing values of the plurality of types of samples calculated by the target weighing value calculating section.

According to such a configuration, when a plurality of types of samples are blended, the reading processing section reads the information for specifying the weight ratio from the holding medium, and the target weighing value calculating section calculates the necessary target weighing value.

Thus, it is possible to simplify user's operation when the plurality of types of samples are blended.

In addition, the target weighing values of the plurality of types of samples can be stored in the storage.

Thus, when the plurality of types of samples are blended again, these samples can be blended using the stored target weighing values.
(4) A target weighing value setting method according to the present invention includes a reading step, an input step, and a target weighing value calculation step. In the reading step, information for specifying a weight ratio of a target substance contained in a sample is read from a holding medium in which the information for specifying the weight ratio is held in association with the sample. In the input step, a target collection weight of the target substance contained in the sample is input. In the target weighing value calculation step, a target weighing value of a sample necessary for collecting the target substance of the target collection weight is calculated based on the information read in the reading step.
(5) The target weighing value setting method may further include a display step. In the display step, the target weighing value calculated in the target weighing value calculation step is displayed.
(6) The target weighing value setting method may further include a storage step. In the storage step, blending information of each sample is stored in a storage when a plurality of types of samples are blended. In the reading step, information for specifying the weight ratio held in the holding medium in association with each of the plurality of types of samples may be read. In the target weighing value calculation step, the respective target weighing values of the plurality of types of samples may be calculated based on the information read in the reading step. In the storage step, the target weighing values of the plurality of types of samples calculated in the target weighing value calculation step may be stored as the blending information in the storage.

According to the present invention, in an electronic balance, a reading processing section reads information for specifying a weight ratio from a holding medium, and a target weighing value calculating section calculates a required target weighing value. Thus, it is possible to omit operation for the user to input information for specifying the weight ratio in a main body of the electronic balance. As a result, it is possible to simplify user's operation when the electronic balance is used.

### BRIEF DESCRIPTION OF THE DRAWINGS

Fig. 1 is a block diagram showing a configuration example of an electronic balance according to a first embodiment of the present invention;
Fig. 2 is a flowchart showing an example of a control operation of a controller of Fig. 1;
Fig. 3 is a diagram showing a display example of a display of Fig. 1;
Fig. 4 is a block diagram showing a configuration example of an electronic balance according to a second embodiment of the present invention; and
Fig. 5 is a flowchart showing an example of a control operation of a controller of Fig. 4.

### DETAILED DESCRIPTION OF THE PREFERRED EMBODIMENTS

### 1. Configuration of Electronic Balance

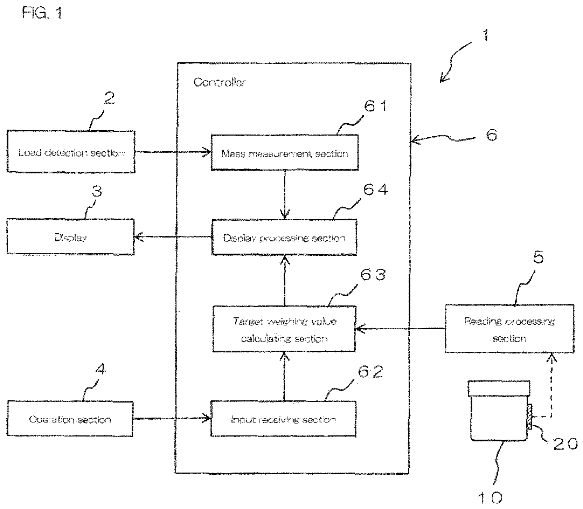

Fig. 1 is a block diagram showing a configuration example of an electronic balance 1 according to a first embodiment of the present invention.

The electronic balance 1 includes a load detection section 2, a display 3, an operation section 4, a reading processing section 5, a controller 6, and the like.

The load detection section 2 detects a load of a sample placed on a weighing pan (not shown). The load detection section 2 is of an electromagnetic type or a load cell type, for example, and detects the load of a sample based on a change in an electrical signal when the sample is placed on the weighing pan.

The display 3 includes a liquid crystal display, for example.

The operation section 4 includes a numeric keypad and the like, for example.

The reading processing section 5 is used for reading information from a holding medium holding the information. In this example, the reading processing section 5 reads information (weight ratio information) from the holding medium in a non-contact manner. Specifically, the reading processing section 5 is a reader such as an RFID reader or a barcode reader.

The controller 6 includes, for example, a central processing unit (CPU). The load detection section 2, the display 3, the operation section 4, the reading processing section 5, and the like are electrically connected to the controller 6. The CPU executes a program, whereby the controller 6 functions as a mass measurement section 61, an input receiving section 62, a target weighing value calculating section 63, a display processing section 64, and the like.

The mass measurement section 61 measures the mass of the sample based on the load detected by the load detection section 2. Specifically, the mass measurement section 61 converts the amount of the change in electrical signal, detected by the load detection section 2, into a mass to calculate the mass of the sample.

The input receiving section 62 receives a setting input through the operation section 4 by a user. Specifically, the input receiving section 62 receives an input of a target collection weight of a target substance contained in the sample.

The target weighing value calculating section 63 calculates a target weighing value of the sample based on the information (weight ratio information) read by the reading processing section 5 and the target collection weight whose input is received by the input receiving section 62.

The display processing section 64 performs the process for displaying on the display 3 the mass of the sample measured by the mass measurement section 61 and the target collection weight calculated by the target weighing value calculating section 63.

### 2. Holding Medium and Weight Ratio Information

In this example, a target sample to be weighed by the electronic balance 1 is stored in a container 10. The container 10 is provided with a holding medium 20. The holding medium 20 is an information holding medium such as an RFID or a barcode. When the holding medium 20 is a barcode, the holding medium 20 may be a one-dimensional barcode or a two-dimensional barcode such as a QR code (registered trademark).

The holding medium 20 holds information (weight ratio information) on the weight ratio of the sample stored in the container 10. Specifically, this information is information (weight ratio information) for specifying the weight ratio of a target substance contained in the sample.

For example, when a compound other than a hydrate in the hydrate is weighed, the weight ratio information includes information on the molecular weight of the hydrate, information on the molecular weight of the hydration water contained in the hydrate, and the like. When a compound other than Hydrochloride in the chloride of the compound is weighed, the weight ratio information includes information on the molecular weight of the chloride of the compound, information on the molecular weight of the chloride contained in the chloride of the compound, and the like. When an amount of a base nuclear molecular weight in a compound is weighed, the weight ratio information includes information on the molecular weight of the compound, information on the molecular weight of the base nuclear molecular weight contained in the compound, and the like. For example, when one compound in a mixture is weighed, the weight ratio information is information on weight percent of one compound in the mixture.

Such weight ratio information is held in the holding medium 20 in association with the sample. The weight ratio information may be information for specifying the weight ratio of the target substance contained in the sample, and is not limited to the above.

### 3. Specific Operation in Electronic Balance

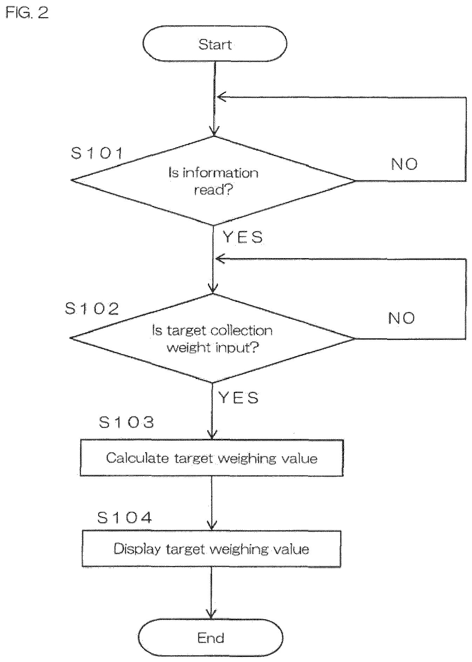

Fig. 2 is a flowchart showing an example of a control operation of the controller 6.

When the weight of a target substance contained in a sample is measured using the electronic balance 1, first, a user prepares the container 10 in which a measurement sample is stored. Then, the user brings the holding medium 20 of the container 10 close to the reading processing section 5 and causes the reading processing section 5 to read information (weight ratio information) held by the holding medium 20. Further, the user operates the operation section 4 and inputs a target collection weight of the target substance contained in the measurement sample. The input receiving section 62 receives the input of the target collection weight. The target collection weight is a target measurement value of a net target substance that the user desires to weigh when a measurement sample containing a substance other than the target substance is weighed.

Thus, when the information of the holding medium 20 is read by the reading processing section 5 (YES in step S101: reading step), and furthermore, when the user operates the operation section 4 and inputs the target collection weight (YES in step S102: input step), the target weighing value calculating section 63 calculates a target weighing value based on these information (step S103: target weighing value calculation step).

Specifically, the target weighing value calculating section 63 calculates the target weighing value of the measurement sample necessary for collecting the target substance of the target collection weight. More specifically, the target weighing value calculating section 63 calculates as the target weighing value the weight of the measurement sample containing the target substance by the target collection weight, from the value of the target collection weight received by the input receiving section 62 by using the weight ratio information read by the reading processing section 5.

Then, the display processing section 64 causes the display 3 to display the target weighing value calculated by the target weighing value calculating section 63 (step S104: display step).

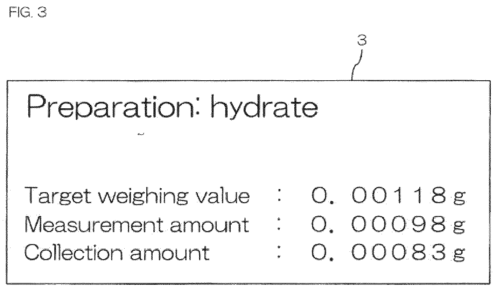

Fig. 3 is a diagram showing a display example of the display 3. Fig. 3 shows a case where the measurement sample is a hydrate and a compound other than the hydrate in the hydrate is weighed as a target substance. In this case, the weight ratio information (the information read in step S101) of the holding medium 20 read by the reading processing section 5 includes information indicating the molecular weight of the hydrate and the like.

The display 3 displays "target weighing value", "measurement amount", and "collection amount". The value of the "target weighing value" is the target weighing value displayed in step S104.

In this example, for example, the state of the display 3 in a case where "0.00100 g" is input as the target collection weight by the user in step S102 is shown in Fig. 3. In this case, the target weighing value calculating section 63 calculates as the target weighing value the weight of the measurement sample (hydrate) containing the target substance by the target collection weight from the value of the target collection weight (information of 0.00100 g) by using the weight ratio information (such as information indicating the molecular weight of the hydrate). In this example, this target weighing value is calculated as "0.00118 g" and displayed on the display 3. This display indicates that when the measurement sample (hydrate) is weighed by 0.00118 g as the target weighing value, the weight of the compound of the target substance is 0.00100 g.

The "measurement amount" displayed on the display 3 represents the weight of the actual measurement sample placed on a weighing pan, and the "collection amount" represents the weight of the net target substance contained in the measurement sample placed on the weighing pan.

In the electronic balance 1, before the measurement sample is placed on the weighing pan, the values of the "measurement amount" and the "collection amount" displayed on the display 3 indicate 0.

When the value of the "target weighing value" is displayed on the display 3 in the electronic balance 1, the user places the measurement sample on the weighing pan while confirming the value of the "target weighing value" on the display 3 of the electronic balance 1. As a result, the value of the "measurement amount" gradually increases as the value of the weight of the actual measurement sample placed on the weighing pan. In addition, the value of the "collection amount" gradually increases as the weight of the net target substance contained in the measurement sample placed on the weighing pan.

When the value of the "measurement amount" matches the value of the "target weighing value", the user stops the operation of placing the measurement sample and completes the weighing in the electronic balance 1. At this time, the value of the "collection amount" matches the target collection weight input by the user. That is, in this example, when the value of the "measurement amount" reaches "0.00118 g", the weighing in the electronic balance 1 is completed. At this time, the value of the "collection amount" is "0.00100 g".

### 4. Operational Effects

(1) According to the present embodiment, as shown in Fig. 1, the electronic balance 1 includes the operation section 4, the reading processing section 5, and the controller 6. The controller 6 includes the input receiving section 62 and the target weighing value calculating section 63. The container 10 for storing a sample is provided with the holding medium 20 that holds the weight ratio information associated with the sample. When the electronic balance 1 is used, the reading processing section 5 reads the weight ratio information from the holding medium 20 (step S101 in Fig. 2: reading step). The input receiving section 62 receives the information on the target collection weight input by the user through operation of the operation section 4 (step S102: input step). The target weighing value calculating section 63 calculates the target weighing value of the measurement sample necessary for collecting the target substance of the target collection weight based on the weight ratio information read by the reading processing section 5 (step S103: target weighing value calculation step).

Thus, it is possible to omit operation for the user to input the weight ratio information in the electronic balance 1.

As a result, it is possible to simplify user's operation when the electronic balance 1 is used. In addition, it is possible to reduce user input errors.
(2) In the electronic balance 1, the controller 6 includes the display processing section 64. The display processing section 64 causes the display 3 to display the target weighing value calculated by the target weighing value calculating section 63 (step S104: display step).

Thus, it is possible for the user to recognize the target weighing value. Then, the user can weigh the sample while continuing the target weighing value.

### 5. Second Embodiment

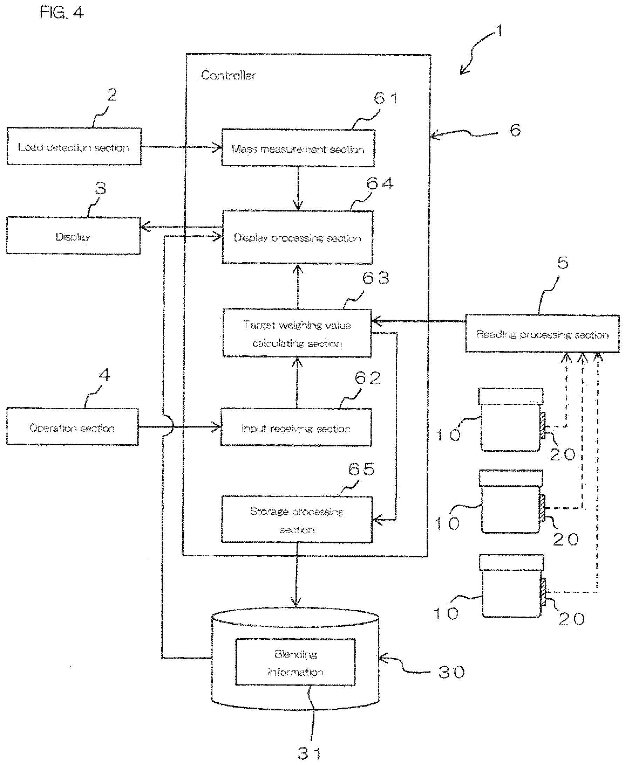

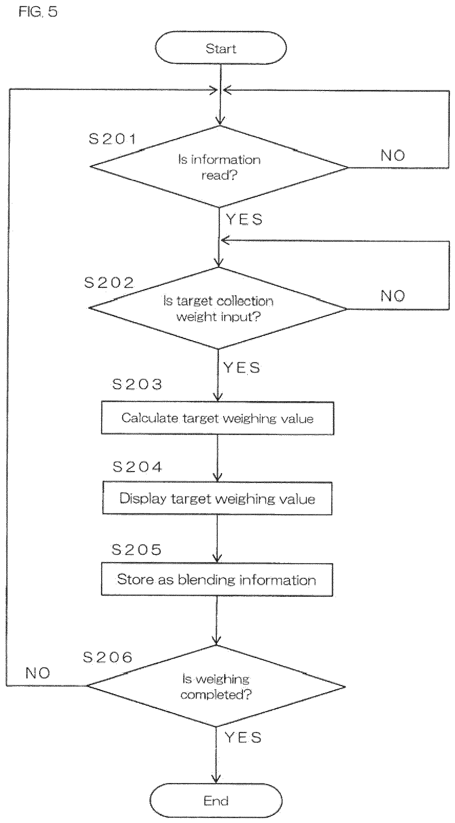

Hereinafter, a second embodiment of the present invention will be described with reference to Figs. 4 and 5. Like or the same reference numerals are given to those components that are like or the same as the corresponding components of the first embodiment and detailed explanations are omitted.

Fig. 4 is a block diagram showing a configuration example of an electronic balance 1 according to the second embodiment of the present invention.

The second embodiment is different from the first embodiment in that the target weighing value calculated by a target weighing value calculating section 63 is stored as blending information.

Specifically, in the second embodiment, the electronic balance 1 is used for measuring each sample when a plurality of types of samples are blended. The electronic balance 1 further includes a storage 30 electrically connected to a controller 6. The controller 6 includes a storage processing section 65.

Fig. 5 is a flowchart showing an example of a control operation of the controller 6. The processes in steps S201 to S204 in Fig. 5 correspond respectively to the processes in steps S101 to S104 in the first embodiment (Fig. 2).

In the second embodiment, a user prepares a plurality of containers 10 in which a plurality of samples to be blended are respectively stored. Specifically, each of the containers 10 stores a sample (measurement sample) containing a target substance to be blended.

Then, the user selects one of the containers 10, brings a holding medium 20 of the container 10 close to a reading processing section 5, and causes the reading processing section 5 to read information (weight ratio information) held by the holding medium 20 (YES in step S201: reading step). Further, the user operates an operation section 4 and inputs a target collection weight of the target substance (substance to be blended) contained in the measurement sample (YES in step S202: input step).

Thereafter, similarly to the above, an input receiving section 62 receives the input of the target collection weight, and the target weighing value calculating section 63 calculates the target weighing value (step S203: target weighing value calculation step). A display processing section 64 causes a display 3 to display the target weighing value (step S204: display step).

Then, the user places the measurement sample on a weighing pan of the electronic balance 1, and when the value of the "measurement amount" indicated by the display 3 matches the value of the "target weighing value", the user stops the operation of placing the measurement sample and completes the weighing in the electronic balance 1. At this time, a value of "collection amount" indicated by the display 3 matches the target collection weight (target blending amount) of the target substance to be blended.

The storage processing section 65 causes the storage 30 to store as blending information 31 the target weighing value calculated by the target weighing value calculating section 63 (step S205: storage step).

Thereafter, when there is another measurement sample (another container 10) containing the target substance to be blended (NO in step S206), the processes from steps S201 to S205 is repeated. At this time, the storage 30 stores as the blending information 31 the target weighing value calculated by the target weighing value calculating section 63. When the measurement samples in all the containers 10 are weighed (YES in step S206), the operation in the electronic balance 1 is completed.

Thereafter, when blending is similarly performed using the electronic balance 1, the display processing section 64 displays the blending information 31 on the display 3. Thus, when blending is performed again, accurate blending can be achieved with reference to the blending information 31.

In the above process, the process in step S201 may be performed after the process in step S202 (the process in step S201 and the process in step S202 may be performed in reverse). For example, when there are a plurality of samples, the target collection weights are collectively input in advance, and then the process for reading the information (weight ratio information) held by the holding medium 20 may be performed.

As described above, according to the second embodiment, when a plurality of types of samples are blended, the reading processing section 5 reads the information for specifying the weight ratio from each of the holding media 20, and the target weighing value calculating section 63 calculates the required target weighing value.

Thus, it is possible to simplify user's operation when the plurality of types of samples are blended. In addition, it is possible to reduce user input errors.

In the electronic balance 1, the target weighing values of the plurality of types of samples can be stored as the blending information 31 in the storage 30.

Thus, when the plurality of types of samples are blended again, these samples can be accurately blended using the stored target weighing values (blending information 31).

### 6. Modified Example

In the above-described embodiments, the weight ratio information is held in the holding medium 20. However, the weight ratio information is stored in the electronic balance 1, and the information associated with the weight ratio information may be held as the information for specifying the weight ratio in the holding medium 20. For example, the weight ratio information is stored in the electronic balance 1, the information on sample names is held in the holding medium 20, and when the reading processing section 5 reads the information of the holding medium 20, the corresponding weight ratio information may be selected in the electronic balance 1.

### DESCRIPTION OF REFERENCE NUMERALS

- 1: Electronic balance
- 5: Reading processing section
- 6: Controller
- 20: Holding medium
- 30: Storage
- 31: Blending information
- 62: Input receiving section
- 63: Target weighing value calculating section
- 64: Display processing section
- 65: Storage processing section

## Claims

1. An electronic balance comprising:
a reading processing section that reads information for specifying a weight ratio of a target substance contained in a sample from a holding medium in which the information for specifying the weight ratio is held in association with the sample;
an input receiving section that receives an input of a target collection weight of the target substance contained in the sample; and
a target weighing value calculating section that calculates a target weighing value of the sample necessary for collecting the target substance of the target collection weight based on the information read by the reading processing section.

2. The electronic balance according to claim 1, further comprising a display processing section that displays the target weighing value calculated by the target weighing value calculating section.

3. The electronic balance according to claim 1 or 2, further comprising a storage processing section that causes a storage to store blending information of a plurality of types of samples when the plurality of types of samples are blended,
wherein the reading processing section reads the information for specifying the weight ratio held in the holding medium in association with each of the plurality of types of samples,
the target weighing value calculating section calculates the respective target weighing values of the plurality of types of samples based on the information read by the reading processing section, and
the storage processing section causes the storage to store as the blending information the target weighing values of the plurality of types of samples calculated by the target weighing value calculating section.

4. A target weighing value setting method, comprising:
a reading step of reading information for specifying a weight ratio of a target substance contained in a sample from a holding medium in which the information for specifying the weight ratio is held in association with the sample;
an input step of inputting a target collection weight of the target substance contained in the sample; and
a target weighing value calculation step of calculating a target weighing value of the sample necessary for collecting the target substance of the target collection weight based on the information read in the reading step.

5. The target weighing value setting method according to claim 4, further comprising a display step of displaying the target weighing value calculated in the target weighing value calculation step.

6. The target weighing value setting method according to claim 4 or 5, further comprising a storage step of causing a storage to store blending information of a plurality of types of samples when the plurality of types of samples are blended,
wherein in reading step, the information for specifying the weight ratio held in the holding medium in association with each of the plurality of types of samples is read,
in the target weighing value calculation step, the respective target weighing values of the plurality of types of samples are calculated based on the information read in the reading step, and
in the storage step, the target weighing values of the plurality of types of samples calculated in the target weighing value calculation step are stored as the blending information in the storage.
